# EUROPÄISCHE PATENTSCHRIFT

(11) **EP 2 470 738 B1**
(45) Veröffentlichungstag und Bekanntmachung des Hinweises auf die Patenterteilung: **12.02.2014**
(21) Anmeldenummer: 10745160.1
(22) Anmeldetag: 11.08.2010
(51) Int. Cl.: E06B 3/02, E05B 65/10, E05B 65/00, E06B 3/663, E06B 3/70, E06B 5/16, E05B 17/00, E05C 9/18, B32B 17/06, B32B 17/10

(54) **BRANDSCHUTZSCHEIBE UND GANZGLASTÜR FÜR BRANDSCHUTZZWECKE**
FIRE PROTECTION PANE AND ALL-GLASS DOOR FOR FIRE PROTECTION PURPOSES
VITRE COUPE-FEU ET PORTE ENTIÈREMENT EN VERRE POUR PROTECTION CONTRE L'INCENDIE

(30) Priorität: 24.08.2009 DE 202009011374 U
(43) Veröffentlichungstag der Anmeldung: 04.07.2012
(73) Patentinhaber: PROMAT GmbH, 40878 Ratingen (DE)
(72) Erfinder: WIEDEMANN, Günter, 40629 Düsseldorf (DE)
(74) Vertreter: Ring & Weisbrodt
(86) Internationale Anmeldenummer: PCT/EP2010/004888
(87) Internationale Veröffentlichungsnummer: WO 2011/023290

(56) Entgegenhaltungen:
- DE-A1- 19 615 902
- DE-U1- 9 400 536
- DE-U1-202008 016 782

## Beschreibung

Die Erfindung betrifft eine Brandschutzscheibe aus zumindest zwei parallel zueinander beabstandeten Glasscheiben, deren durch eine allseitig angeordnete, insbesondere durch ein Abstandshalteelement gewährleistete, Abdichtung geschlossener Innenraum mit einem insbesondere gelartigen Brandschutzmittel gefüllt ist. Die Erfindung betrifft ferner eine Ganzglastür für Brandschutzzwecke mit einer Brandschutzscheibe der genannten Art.

Verschiedene Arten von Brandschutzscheiben sind bekannt. Neben Brandschutzscheiben, die mehrlagig aus Glasscheiben mit einer jeweils dazwischen angeordneten Brandschutzschicht (Intumeszenzmaterial) aufgebaut sind, das im Brandfall aktiviert wird und die Wärmestrahlung unter Bildung einer hochwirksamen Dämmschicht absorbiert, ist eine Brandschutz-Glasplatteneinheit bekannt, die aus zwei nach Art einer Isolierglasscheibenanordnung mittels Abstandshalter und einem PU-Randverbund auf Abstand und aneinandergehaltenen ESG-Scheiben aufgebaut ist, deren Innenraum mit einem gelartigen Brandschutzmittel ausgefüllt ist. Bei dieser bekannten Brandschutzscheibe ist das randseitig zwischen den beiden ESG-Scheiben angeordnete Abstandshalteelement, gegebenenfalls gemeinsam mit dem Randverbund aus Polyurethan die Abdichtung, die dafür sorgt, dass ein geschlossener Innenraum zwischen den ESG-Scheiben entsteht, welcher mit dem Gel als Brandschutzmittel ausgefüllt werden kann. Als Abstandshalteelement wird bei dem bekannten Stand der Technik eine im Querschnitt U-förmige Kunststoffleiste verwendet, die umlaufend zwischen den beiden ESG-Scheiben im Randbereich durch Verklebung befestigt ist.

Eine Brandschutzscheibe der beschriebenen Art ist gemäß der deutschen Gebrauchsmusterschrift DE 20 2008 016 782 U1 als Ganzglastür ausgebildet und hierzu mit einer speziellen Schließeinrichtung versehen, die die mechanische Stabilität der Verglasung nicht beeinträchtigt, die Brandschutzanforderungen erfüllt und in einfacher Weise fest an der Brandschutzscheibe befestigbar ist. Dies ist insofern von Bedeutung, als mit gelförmigem Brandschutzmittel versehene Brandschutzscheiben nicht druckstabil gegenüber senkrecht auf die Glasflächen wirkenden Kräften sind, da die Gelfüllung keinen festen Widerstand bietet.

Brandschutzscheiben der beschriebenen Art werden vielfältig in Brandschutzverglasungen eingesetzt, insbesondere in der Anwendung an Ganzglastüren für Brandschutzzwecke sowie entsprechenden Fenstern. Dabei ergibt sich insbesondere bei großen Türen oder mehrflügeligen Türanlagen die Notwendigkeit, dass zusätzlich zu der normalen Schließeinrichtung eine Obenverriegelung und/oder Untenverriegelung vorgesehen werden muss, um die Stabilität insbesondere im Brandfall zu gewährleisten. Hierzu ist es bekannt, von der Schließeinrichtung ausgehend eine Stange nach oben und/oder unten zu führen, die in einem Verriegelungselement endet, welches in eine Gegenhaltung in der Zarge bzw. dem Boden zur Fixierung des Türflügels einführbar ist. Die Betätigung der Stange erfolgt über den Drücker der Türschließeinrichtung zur Öffnung, wie auch zur Schließung/Verriegelung der Tür. In Brandversuchen hat sich herausgestellt, dass eine erhebliche Verbesserung des Brandverhaltens mit solch einer zusätzlichen Verriegelung erzielt wird, da ein ungewolltes Aufklappen der Tür insbesondere oben unter den sehr hohen Temperaturen sowie eine damit einhergehende Verformung aller Elemente vermieden wird. Nachteilig ist, dass bekannte Stangenführungen außen auf der Brandschutzscheibe angeordnet sind. Eine solche Außenführung ist technisch aufwändig, verschlechtert das Design und wird leicht im Dauerbetrieb beschädigt. Sie ist darüber hinaus im Brandfall gegebenenfalls direkt der Einwirkung von Flammen und Hitze ausgesetzt.

Der Erfindung liegt die **Aufgabe** zugrunde, eine solche aus zumindest zwei parallel zueinander beabstandeten Glasscheiben bestehende Brandschutzscheibe im Hinblick auf die Verwendung von daran anzuordnenden Betätigungsmitteln zu verbessern und insbesondere eine Ganzglastür für Brandschutzzwecke zu entwickeln, deren Oben- und gegebenenfalls Untenverriegelung die genannten Nachteile vermeidet.

Die Aufgabe ist an einer Brandschutzscheibe der eingangs genannten Art dadurch **gelöst,** dass die Abdichtung an mindestens einer Seite zumindest teilweise aus einem zwischen den zwei Glasscheiben eingesetzten Rohr besteht, das als Führung für ein innen im Rohr angeordnetes axial verschiebbares Betätigungsmittel ausgebildet ist. Anstelle des bekannten im Querschnitt U-förmigen Abstandshalteprofils wird demnach zwischen den beiden ESG-Scheiben an der gewünschten Position, nämlich dort, wo eine Betätigung erforderlich ist, ein Rohr eingesetzt, das als Führung für ein axial verschiebbares Betätigungsmittel ausgebildet ist. Das Rohr wird vorzugsweise randseitig mit einem kleinen Abstand nach innen angeordnet und mit den angrenzenden Glasscheiben verklebt. Es ist vorzugsweise zylindrisch ausgebildet, um als Betätigungsmittel eine darin verschiebbare Stange kreisförmigen Querschnitts aufzunehmen. Anstelle der bevorzugten zylindrischen Körperausbildung können auch im Querschnitt mehrkantige Ausführungsformen je nach Anwendungsfall mit Vorteil eingesetzt werden.

Sicherheitshalber und aus optischen Gründen kann nach außen - wie an sich bekannt - eine Vergußmasse vorgesehen werden, um deren Raum zwischen den beiden Glasscheiben nach außen auszufüllen. Zusätzlich kann zur Erhöhung des Brandschutzes ein Streifen aus aufschäumendem Material zum Verschluss eines zu einem benachbarten Element, beispielsweise einer Türzarge, im Brandfall aufschäumendes Material angeordnet werden. Vorzugsweise besteht das Rohr aus für den Brandschutz geeignetem Kunststoff.

Unter Nutzung einer derartigen Brandschutzscheibe ist ferner Gegenstand der Erfindung eine Ganzglastür für Brandschutzzwecke mit einer aus zumindest zwei parallel zueinander beabstandeten Glasscheiben bestehenden Brandschutzscheibe, die einen geschlossenen Innenraum durch eine allseitig angeordnete, insbesondere durch ein Abstandhalteelement gewährleistete Abdichtung aufweist, welche mit einem insbesondere gelartigen Brandschutzmittel gefüllt ist. Diese Abdichtung besteht an mindestens einer Seite zumindest teilweise aus einem zwischen den zwei Glasscheiben eingesetzten Rohr, das als Führung für ein innen im Rohr angeordnetes axial verschiebbares Betätigungsmittel ausgebildet ist.

Erfindungsgemäß ist die Ganzglastür an einer Seitenkante mit einer Ausnehmung versehen, in die ein Schloss eingesetzt ist, wobei zusätzlich eine Obenverriegelung vorgesehen ist, die mit dem Schloss betätigbar ist, wobei die Obenverriegelung ein heb- und absenkbares Verriegelungselement aufweist, zu dessen Betätigung das im Rohr der Brandschutzscheibe angeordnete Betätigungsmittel, vorzugsweise eine Stange, unmittelbar oder mittelbar mit dem Schloss einerseits und dem Verriegelungselement andererseits verbunden ist.

Hierdurch wird erreicht, dass die bislang außen auf der Ganzglastür angeordnete Obenverriegelung nach innen, zwischen die beiden Einscheibensicherheitsglasscheiben verlegt werden kann, so dass diese gesamte Technik optisch praktisch nicht in Erscheinung tritt. Technisch ist die Lösung außerordentlich einfach, elegant, durch Teileeinsparung preiswerter und gewährleistet einen verbesserten Brandschutz.

Vorzugsweise ist zwischen dem Schloss und dem Betätigungsmittel ein Umlenkglied angeordnet, das auch verstellbar sein kann, um bei nichtkoaxialer Anordnung der Teile in einfacher Weise die Kraftübertragung sicherzustellen. Im gleichen Sinn kann zwischen dem Betätigungsmittel und der Verriegelung ebenfalls ein Umlenkglied angeordnet sein.

Um den Schließvorgang durch einfaches Loslassen des in Öffnungsstellung gedrückten Drückers durch die Bedienungsperson durchzuführen, ist in zweckmäßiger Ausgestaltung der Erfindung vorgeschlagen, das Betätigungsmittel in Richtung Schließstellung des Verriegelungselementes durch eine Federanordnung zu belasten.

Auf diese Weise kann die Bedienungsperson die Tür gemeinsam mit der Obenverriegelung durch Drücken der Klinke öffnen und findet nach Loslassen der Klinke eine Verriegelung sowohl an der Schließeinrichtung, als auch an der Obenverriegelung statt.

Weitere Einzelheiten, Merkmale und Vorteile der Erfindung ergeben sich aus der nachfolgenden Beschreibung der zugehörigen Zeichnung. In der Zeichnung zeigt:
- Fig. 1: eine Brandschutzscheibe gemäß der Erfindung im Teilquerschnitt schematisch,
- Fig. 2: eine Ganzglastür gemäß der Erfindung in einer Draufsicht schematisch,
- Fig. 3: eine vergrößerte Ansicht gemäß a der Fig. 2 der Zeichnung unter schematischer Verdeutlichung innenliegender Teile der Schließeinrichtung,
- Fig. 4: eine perspektivische Darstellung der Schließeinrichtung der Ganzglastür und
- Fig. 5: eine perspektivische Darstellung des Verriegelungselementes der Ganzglastür.

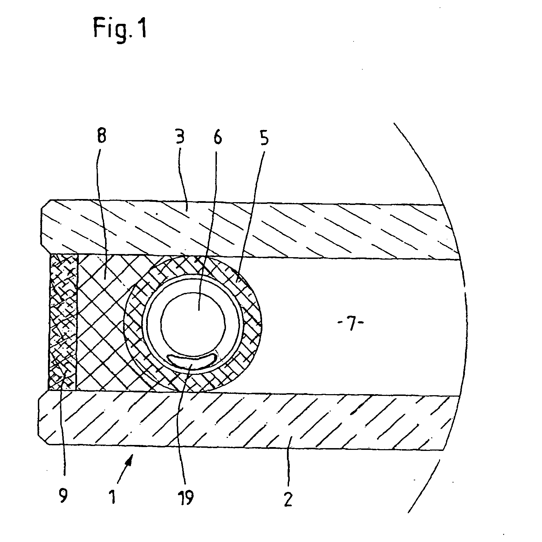

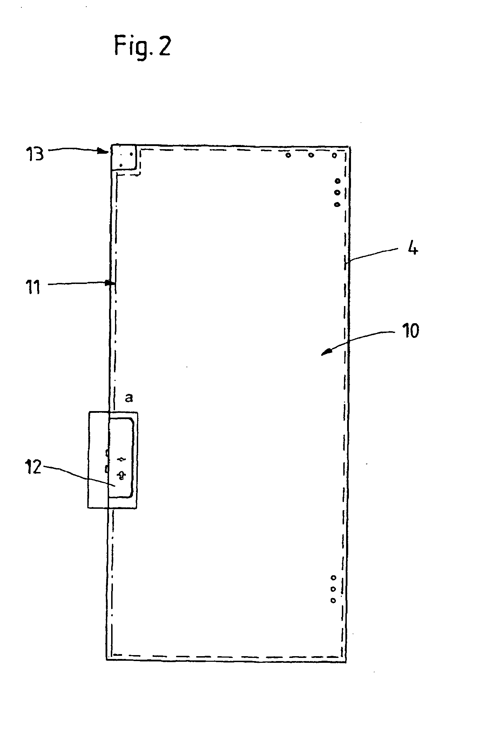

In Fig. 1 der Zeichnung ist eine erfindungsgemäße Brandschutzscheibe in Form eines Teilquerschnitts abgebildet. Die Brandschutzscheibe 1 besteht aus zwei parallel zueinander mit Abstand angeordneten Glasscheiben 2 und 3 aus Einscheibensicherheitsglas (ESG). Zwischen den Glasscheiben 2 und 3 befindet sich ein in Fig. 1 der Zeichnung nicht erkennbares innen umlaufendes bekanntes Abstandshalteprofil 4 (gestrichelt symbolisiert in Fig. 2), das erfindungsgemäß an mindestens einer Seite der Brandschutzscheibe 1 teilweise ersetzt ist durch ein zwischen den zwei Glasscheiben 2 und 3 eingesetztes Rohr 5, das als Führung für ein innen im Rohr 5 angeordnetes axial verschiebbares Betätigungsmittel in Form einer Stange 6 ausgebildet ist. Im Ausführungsbeispiel ist die linke Seite der Brandschutzscheibe 1 dargestellt, und zwar die Stelle, an der das im Stand der Technik übliche Abstandshalteprofil ersetzt ist durch das Rohr 5 mit der innen angeordneten Stange 6. Das Rohr 5 besteht aus hochtemperaturbeständigem Kunststoff, ist mit Abstand zur seitlichen Außenkante nach innen versetzt zwischen den beiden Glasscheiben 2 und 3 angeordnet und mit diesen verklebt, so dass - wie mit dem üblichen bekannten Abstandshalteprofil - ein geschlossener Innenraum 7 zwischen den beiden Glasscheiben 2 und 3 gebildet ist, der mit einem gelartigen Brandschutzmittel gefüllt werden kann. Das Rohr 5 hat somit - wie das im übrigen Bereich der Scheibe umlaufende Abstandshalteprofil 4 - eine Dichtfunktion, die ein Herausfließen des zwischen den Glasscheiben 2 und 3 im Gebrauchszustand befindlichen Brandschutzgels verhindert.

Der Raum neben dem leicht nach innen versetzten Rohr 5 zum Rand der Scheibe hin ist - wie auch im übrigen beim umlaufenden Abstandshalteprofil 4 - mit einer Vergußmasse 8 ausgespritzt, die wiederum nach außen durch einen eingeklebten Streifen 9 aus im Brandfall aufschäumendem Material abgedeckt ist, so dass sämtliche Seitenkanten der Brandschutzscheibe 1 brandschutztechnisch geschützt sind.

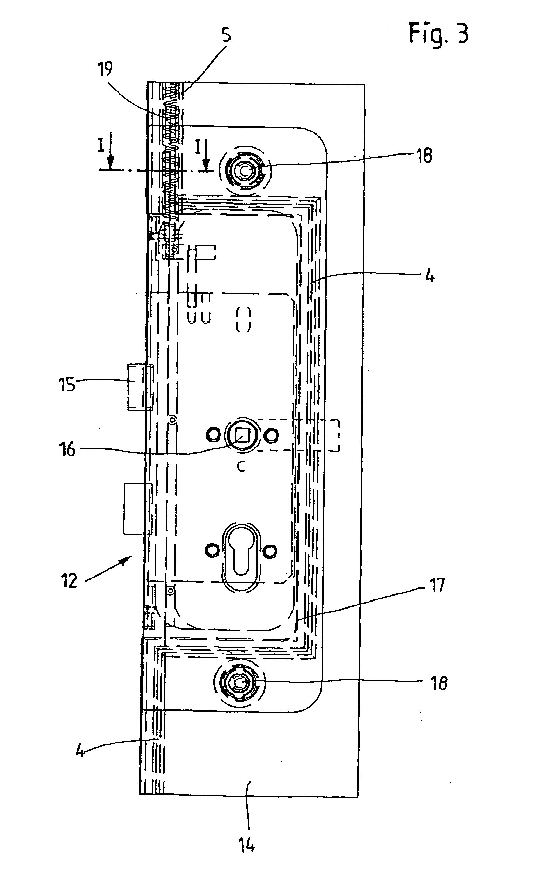

Aus obiger Beschreibung ist erkennbar, dass der Kern der vorliegenden Erfindung darin besteht, eine an sich bekannte Brandschutzscheibe der beschriebenen Art dadurch zu verbessern, dass an Stellen, an denen abhängig vom Einsatzzweck der Brandschutzscheibe ein Betätigungselement an der Brandschutzscheibe angebracht werden muss, anstelle des üblichen Abstandshalteprofils zwischen den zwei Glasscheiben 2 und 3 ein Rohr dicht eingesetzt wird, das als Führung für ein innen im Rohr angeordnetes axial verschiebbares Betätigungsmittel ausgebildet ist. Im in Fig. 1 dargestellten Ausführungsbeispiel sind das Rohr 5 und die Stange 6 zylindrisch und dienen gemäß den Fig. 2, 3, 4 und 5 als Betätigungselement für eine Obenverriegelung 11 einer Ganzglastür 10 für Brandschutzzwecke. In dieser Anwendung entspricht Fig. 1 dem Schnitt I-I der Fig. 3, wobei jedoch ausdrücklich darauf hingewiesen wird, dass mögliche Anwendungen des Erfindungsgedankens nicht auf dieses Ausführungsbeispiel beschränkt sind.

In Fig. 2 der Zeichnung ist eine erfindungsgemäße rahmenlose Brandschutzglastür 10 abgebildet, die gemäß Fig. 1 der Zeichnung aus zwei parallel beabstandeten Glasscheiben 2 und 3 aus Einscheibensicherheitsglas (ESG) aufgebaut ist. Zwischen den Glasscheiben 2 und 3 befindet sich das in Fig. 1 schematisch gestrichelt dargestellte innenliegende umlaufende Abstandshalteprofil 4, das im Bereich zwischen einem üblichen Schloss 12 und einem Verriegelungselement 13 der Obenverriegelung 11 ersetzt ist durch das Rohr 5 mit innenliegender Stange 6 gemäß Fig. 1 der Zeichnung. Die Obenverriegelung 11 ist durch eine strichpunktierte Linie schematisch in Fig. 2 der Zeichnung hinsichtlich ihrer Positionierung verdeutlicht.

Gemäß Fig. 3 der Zeichnung umfasst das Schloss 12 eine auf die Verglasung aufgesetzte Schlossabdeckung 14 in Form einer Stahlplatte, wobei die Schließmimik eine Schlossfalle 15 aufweist, die über einen Türdrücker 16 mittels einer Drückervierkants betätigbar ist. Das Schloss 12 ist im wesentlichen in eine Ausnehmung 17 der beiden Glasscheiben 2 und 3 eingesetzt und an diesen über die Schlossabdeckung 14 mittels Fixiermitteln 18 befestigt. Die genaue konstruktive Ausbildung der Schließeinrichtung 12 einer solchen Ganzglastür 10 für Brandschutzzwecke ist in DE 20 2008 016 782 U1 beschrieben.

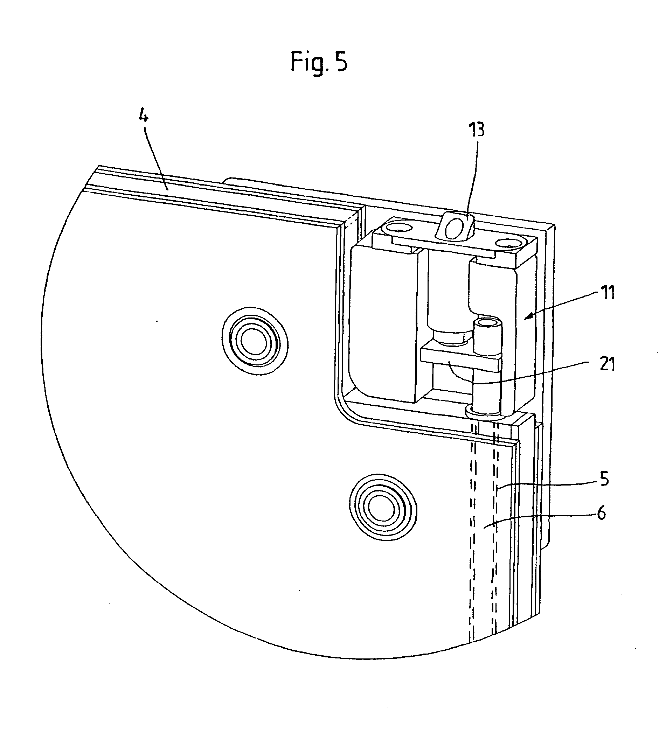

Zusätzlich zum Schloss 12 ist die Ganzglastür 10 mit einer Obenverriegelung 11 versehen, die im Brandfall sicherstellt, dass ein Aufklappen der Tür im oberen Bereich und eine darauf folgende Gesamtverformung vermieden wird. Die Obenverriegelung 11 weist das aus Fig. 5 der Zeichnung ersichtliche heb- und absenkbare Verriegelungselement 13 auf, das beispielsweise in eine entsprechende Ausnehmung der Türzarge im Schließzustand eingreift. Zur Betätigung des Verriegelungselementes 13 steht das Schloss 12 und somit letztlich der Türdrücker 16 in einer Wirkverbindung zu dem Verriegelungselement 13 über die im Rohr 5 angeordnete heb- und absenkbare Stange 6 der Obenverriegelung 11, deren Führung zwischen den beiden Glasscheiben 2 und 3 gemäß Fig. 1 der Zeichnung anstelle des umlaufenden Abstandhalteprofils 4 eingeklebt ist. Die Stange 6 ist durch eine Schraubenfeder 19 in Schließrichtung belastet. Die Feder 19 ist innerhalb des Rohrs 5, wie auch die Schnittdarstellung der Fig. 1 verdeutlicht, angeordnet, und wirkt derart, dass die über den Türdrücker 16 bewirkte Entriegelung sowohl das Schloss 12 als auch der Obenverriegelung 11 nach Loslassen des Türdrückers 16 aufgehoben wird und die Obenverriegelung 11 wieder in die Schließstellung verbracht wird.

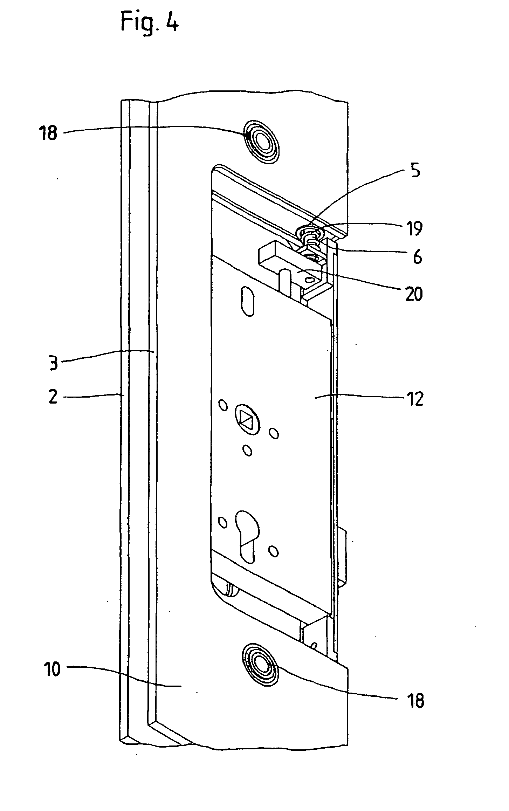

Aus Fig. 3 der Zeichnung und insbesondere Fig. 4 der Zeichnung in der perspektivischen Darstellung ist ersichtlich, dass die Kraftübertragung von dem Schloss 12 auf die Stange 6 und von dieser wiederum auf das Verriegelungselement 13 der Obenverriegelung 11 einer zweifachen Umlenkung aufgrund nicht gleichachsiger Positionierung der Betätigungsmittel bedarf. Es ist deshalb zwischen dem Schloss 12 und der Stange 6 das insbesondere in Fig. 4 perspektivisch dargestellte erste Umlenkglied 20 und gemäß Fig. 5 von der Stange 6 zum Verriegelungselement 13 ein zweites Umlenkglied 21 vorgesehen.

### Bezugszeichenliste

- 1: Brandschutzscheibe
- 2: Glasscheibe
- 3: Glasscheibe
- 4: Abstandshalteprofil
- 5: Rohr
- 6: Stange
- 7: Innenraum
- 8: Vergußmasse
- 9: Intumeszenzstreifen
- 10: Ganzglastür
- 11: Obenverriegelung
- 12: Schloss
- 13: Verriegelungselement
- 14: Schlossabdeckung
- 15: Schlossfalle
- 16: Türdrücker
- 17: Ausnehmung
- 18: Fixiermittel
- 19: Feder
- 20: Umlenkeinrichtung
- 21: Umlenkeinrichtung

## Patentansprüche

1. Brandschutzscheibe (1) aus zumindest zwei parallel zueinander beabstandeten Glasscheiben (2, 3), deren durch eine allseitig angeordnete, insbesondere durch ein Abstandshalteelement (4) gewährleistete, Abdichtung geschlossener Innenraum (7) mit einem insbesondere gelartigen Brandschutzmittel gefüllt ist,
**dadurch gekennzeichnet,**
**dass** die Abdichtung an mindestens einer Seite zumindest teilweise aus einem zwischen den zwei Glasscheiben (2, 3) eingesetzten Rohr (5) besteht, das als Führung für ein innen im Rohr (5) angeordnetes axial verschiebbares Betätigungsmittel ausgebildet ist.

2. Brandschutzscheibe nach Anspruch 1, **dadurch gekennzeichnet, dass** das Rohr (5) randseitig mit einem kleinen Abstand nach innen versetzt angeordnet ist und mit den angrenzenden Glasscheiben (2, 3) verklebt ist.

3. Brandschutzscheibe nach Anspruch 1 oder 2, **dadurch gekennzeichnet, dass** das Rohr (5) zylindrisch ausgebildet ist und als Betätigungsmittel eine darin verschiebbare Stange (6) kreisförmigen Querschnitts aufnimmt.

4. Brandschutzscheibe nach Anspruch 1 oder 2, **dadurch gekennzeichnet, dass** das Rohr (5) als mehrkantiger, insbesondere als vierkantiger Hohlkörper ausgebildet ist und als Betätigungsmittel eine darin verschiebbare Stange (6) kreisförmigen Querschnitts aufnimmt.

5. Brandschutzscheibe nach Anspruch 1 oder 2, **dadurch gekennzeichnet, dass** das Rohr (5) als zylindrischer Hohlkörper ausgebildet ist und als Betätigungsmittel eine darin verschiebbare Stange mehrkantigen, insbesondere vierkantigen, Querschnitts aufnimmt.

6. Brandschutzscheibe nach einem der Ansprüche 1 bis 5, **dadurch gekennzeichnet, dass** als äußerer Abschluss randseitig eine Vergußmasse (8) zwischen den beiden Glasscheiben (2, 3) vorgesehen ist.

7. Brandschutzscheibe nach Anspruch 6, **dadurch gekennzeichnet, dass** außen auf der Vergußmasse (8) ein Streifen aus Brandschutzmaterial, vorzugsweise intumeszierendem Material, angeordnet ist.

8. Brandschutzscheibe nach einem der Ansprüche 1 bis 7, **dadurch gekennzeichnet, dass** das Rohr (5) aus für den Brandschutz geeignetem Kunststoff besteht.

9. Ganzglastür (10) für Brandschutzzwecke mit einer Brandschutzscheibe (1) nach einem der Ansprüche 1 bis 6, die an einer Seitenkante mit einer Ausnehmung (17) versehen ist, in die ein Schloss (12) eingesetzt ist, wobei zusätzlich eine Obenverriegelung (11) vorgesehen ist, die mit dem Schloss (12) betätigbar ist,
**dadurch gekennzeichnet, dass** die Obenverriegelung (11) ein heb- und absenkbares Verriegelungselement (13) aufweist, zu dessen Betätigung das im Rohr (5) der Brandschutzscheibe (1) angeordnete Betätigungsmittel, vorzugsweise eine Stange (6), unmittelbar oder mittelbar mit dem Schloss (12) einerseits und dem Verriegelungselement (13) andererseits verbunden ist.

10. Ganzglastür nach Anspruch 9, **dadurch gekennzeichnet, dass** zwischen dem Schloss (12) und dem Betätigungsmittel ein erstes Umlenkglied (20), vorzugsweise verstellbar, angeordnet ist.

11. Ganzglastür nach Anspruch 9 oder 10, **dadurch gekennzeichnet, dass** zwischen dem Betätigungsmittel und dem Verriegelungselement (13) ein zweites Umlenkglied (21), vorzugsweise verstellbar, angeordnet ist.

12. Ganzglastür nach einem der Ansprüche 9 bis 11, **dadurch gekennzeichnet, dass** das Betätigungsmittel in Richtung Schließstellung des Verriegelungselementes (13) durch eine Federanordnung (19) belastet ist.

## Claims

1. A fire protection pane (1) composed of at least two glass panes (2, 3) spaced in parallel from each other, the interior (7) of which, that is closed by a sealing which is arranged on all sides and in particular ensured by a spacer element (4), is filled with an especially gel-like fire protection agent,
**characterized in that**
the sealing on at least one side consists at least partially of a tube (5) that is inserted between the two glass panes (2, 3) and that is designed as guidance for an actuation means which is located inside the tube (5) and can be axially displaced.

2. A fire protection pane according to claim 1, **characterized in that** at the edge the tube (5) is offset towards the inside over a short distance and is glued to the adjacent glass panes (2, 3).

3. A fire protection pane according to claim 1 or 2, **characterized in that** the tube (5) is cylindrical and receives a rod (6), that comprises a circular cross section and can be displaced in the tube, as actuation means.

4. A fire protection pane according to claim 1 or 2, **characterized in that** the tube (5) is designed as a polygonal, especially square hollow body and receives a rod (6), that comprises a circular cross section and can be displaced in the tube, as actuation means.

5. A fire protection pane according to claim 1 or 2, **characterized in that** the tube (5) is designed as a cylindrical hollow body and receives a rod (6), that comprises a polygonal, in particular square cross section and can be displaced in the tube, as actuation means.

6. A fire protection pane according to one of the claims 1 through 5, **characterized in that** at the edge a casting compound (8) is provided between the two glass panes (2, 3) as outer border.

7. A fire protection pane according to claim 6, **characterized in that** a strip made of fire protection material, preferably intumescent material, is arranged outside on the casting compound (8).

8. A fire protection pane according to one of the claims 1 through 7, **characterized in that** the tube (5) is made of plastic that is suitable for the fire protection.

9. An all-glass door (10) for fire protection purposes comprising a fire protection pane (1) according to one of the claims 1 through 6, which is provided with a recess (17) on a side edge, in which recess a lock (12) is inserted, wherein a top locking (11) is additionally provided which can be actuated with the lock (12),
**characterized in that**
the top locking (11) comprises a locking element (13) that can be lifted and lowered, for the actuation of which the actuation means arranged in the tube (5) of the fire protection pane (1), preferably a rod (6), is directly or indirectly connected to the lock (12), on the one hand, and to the locking element (13), on the other hand.

10. An all-glass door according to claim 9, **characterized in that** a first deflection member (20) that is preferably adjustable is disposed between the lock (12) and the actuation means.

11. An all-glass door according to claim 9 or 10, **characterized in that** a second deflection member (21) that is preferably adjustable is disposed between the actuation means and the locking element (13).

12. An all-glass door according to one of the claims 9 through 11, **characterized in that** the actuation means is loaded by a spring arrangement (19) into the direction of the closed position of the locking element (13).

## Revendications

1. Vitre coupe-feu (1) composée d'au moins deux vitres (2, 3) espacées en parallèle l'une de l'autre, dont l'intérieur (7) fermé par une garniture disposée de tous les côtés et notamment assurée par un élément espaceur (4) est rempli par un produit ignifuge qui a notamment la consistance d'un gel,
**caractérisé en ce qu'**
au moins d'un côté la garniture est au moins partiellement composée d'un tuyau (5) qui est inséré entre les deux vitres (2, 3) et qui est configuré comme un guidage destiné à un moyen d'actionnement axialement déplaçable et disposé à l'intérieur du tuyau (5).

2. Vitre coupe-feu selon la revendication 1, **caractérisé en ce qu'**au niveau du bord le tuyau (5) est décalé par une petite distance vers l'intérieur et collé avec les vitres (2, 3) adjacentes.

3. Vitre coupe-feu selon la revendication 1 ou 2, **caractérisé en ce que** le tuyau (5) est cylindrique et reçoit une barre (6) ayant une section transversale circulaire et étant déplaçable à l'intérieur du tuyau en tant que moyen d'actionnement.

4. Vitre coupe-feu selon la revendication 1 ou 2, **caractérisé en ce que** le tuyau (5) est configuré comme un corps creux polygonal, notamment carré et reçoit une barre (6) ayant une section transversale circulaire et étant déplaçable à l'intérieur du tuyau en tant que moyen d'actionnement.

5. Vitre coupe-feu selon la revendication 1 ou 2, **caractérisé en ce que** le tuyau (5) est configuré comme un corps creux cylindrique et reçoit une barre (6) ayant une section transversale polygonale, notamment carrée et étant déplaçable à l'intérieur du tuyau en tant que moyen d'actionnement.

6. Vitre coupe-feu selon l'une des revendications 1 à 5, **caractérisé en ce qu'**au niveau du bord une masse de scellement (8) est prévue entre les deux vitres (2, 3) en tant que bordure extérieure.

7. Vitre coupe-feu selon la revendication 6, **caractérisé en ce qu'**une bande en matériau coupe-feu, notamment en matériau intumescent, est disposée sur l'extérieur de la masse de scellement (8).

8. Vitre coupe-feu selon l'une des revendications 1 à 7, **caractérisé en ce que** le tuyau (5) est en matière plastique appropriée à la protection contre le feu.

9. Porte entièrement en verre (10) destinée à la protection contre le feu et comprenant une vitre coupe-feu (1) selon l'une des revendications 1 à 6, la porte étant munie d'un évidement (17) au niveau d'un bord latéral, une serrure (12) étant insérée dans l'évidement et un verrou supérieur susceptible d'être actionné avec la serrure (12) étant supplémentairement prévu,
**caractérisé en ce que**
le verrou supérieur (11) comporte un élément de verrouillage (13) susceptible d'être soulevé et abaissé, pour l'actionnement duquel le moyen d'actionnement disposé dans le tuyau (5) de la vitre coupe-feu (1), de préférence une barre (6), est directement ou indirectement relié à la serrure (12), d'une part, et à l'élément de verrouillage (13), d'autre part.

10. Porte entièrement en verre selon la revendication 9, **caractérisé en ce qu'**un premier membre de déflexion (20), qui est de préférence réglable, est disposé entre la serrure (12) et le moyen d'actionnement.

11. Porte entièrement en verre selon la revendication 9 ou la revendication 10, **caractérisé en ce qu'**un second membre de déflexion (21), qui est de préférence réglable, est disposé entre le moyen d'actionnement et l'élément de verrouillage (13).

12. Porte entièrement en verre selon l'une des revendications 9 à 11, **caractérisé en ce que** le moyen d'actionnement est sollicité par un dispositif de ressort (19) dans la direction de la position fermée de l'élément de verrouillage (13).
